Europäisches Patentamt

European Patent Office

Office européen des brevets

(19)

(11) **EP 1 369 462 A1**

(12) **EUROPEAN PATENT APPLICATION**
published in accordance with Art. 158(3) EPC

(43) Date of publication:
**10.12.2003 Bulletin 2003/50**

(51) Int Cl.⁷: **C09F 7/06**

(21) Application number: **01273681.5**

(86) International application number:
**PCT/JP01/11076**

(22) Date of filing: **18.12.2001**

(87) International publication number:
**WO 02/062911 (15.08.2002 Gazette 2002/33)**

(84) Designated Contracting States:
**AT BE CH CY DE DK ES FI FR GB GR IE IT LI LU MC NL PT SE TR**

(30) Priority: **06.02.2001 JP 2001029574**

(71) Applicant: **Arakawa Chemical Industries, Ltd.**
**Osaka-shi, Osaka 541-0046 (JP)**

(72) Inventors:
• **MIYAMOTO, T.,**
  **R & D Cent. of Arakawa Che. Ind. Ltd**
  **Osaka 538-0053 (JP)**
• **FUJIWARA, T.,**
  **R & D Cent. of Arakawa Che. Ind. Ltd**
  **Osaka-shi, Osaka 538-0053 (JP)**

(74) Representative: **VOSSIUS & PARTNER**
**Siebertstrasse 4**
**81675 München (DE)**

(54) **PROCESSES FOR PRODUCING POLYMERIZED ROSIN**

(57)    A process for efficiently preparing a polymerized rosin through simple preparing steps without using an advanced equipment; and a novel process capable of efficiently and economically preparing a polymerized rosin by reusing a recovered catalyst. Rosin is polymerized in the presence of particles of a copolymer of (a) an ethylenically unsaturated monomer and (b) a crosslinking monomer copolymerizable with the monomer (a), the particles having an average particle diameter of 0.1 to 3 mm, a specific surface area of 1 to 70 $m^2/g$, a pore volume of 0.1 to 1 ml/g, an average pore diameter of 100 to 1,500 Å and an acidic functional group content of 2.0 to 7.0 milli-equivalent/g. The copolymer is recovered and then reused in the polymerization of rosin.

EP 1 369 462 A1

**Description**

TECHNICAL FIELD

The present invention relates to a process for preparing a polymerized rosin. More particularly, the invention relates to a novel process capable of efficiently preparing a polymerized rosin through simple preparing steps without using an advanced equipment.

BACKGROUND ART

A polymerized rosin which is prepared from gum rosin, wood rosin or tall oil rosin, and its derivatives such as an ester of the polymerized rosin have been suitably used as a binder or an additive in wide fields such as a printing ink, a paint, a tackifier, an adhesive and a flux because of their excellent properties such as pigment-dispersing ability, compatibility, tackiness and adhesivity.

As a process for preparing a polymerized rosin is well known a process wherein a polymerized rosin is obtained by polymerizing a rosin in an organic solvent such as toluene or xylene in the presence of an acidic compound as a catalyst, e.g., sulfuric acid, formic acid, p-toluenesulfonic acid, methansulfonic acid, hydrogen fluoride, zinc chloride, aluminum chloride or titanium tetrachloride, and then removing the catalyst, the solvent and the unreacted rosin. Among the above-mentioned catalysts, zinc chloride has been considered to be particularly preferable because it particularly lowers a side reaction such as decarboxylation of the rosin and has a higher catalytic activity.

However, when a polymerized rosin is prepared by using the above-mentioned catalysts, a reaction vessel having glass lining or a reaction vessel made of an expensive material such as hastelloy must be used because a reaction vessel made of a usual material such as stainless steel is easy to be corroded by the use of these catalysts. In addition, if a polymerized rosin contaminated by these catalysts is used for an application such as tackifier or adhesive, the catalysts may deteriorate properties of products prepared using the polymerized rosin. Therefore, the preparation process becomes complicated because a step for removing the catalysts such as water washing is indispensable. In addition, because wastewater therefrom contains a toxic heavy metal and the like derived from the catalysts, the wastewater must be highly treated. This causes heavy burden in aspects of equipment and economy.

Development has been desired for an efficient process capable of preparing a polymerized rosin by using a simple equipment through more simple preparing steps, and further capable of reusing a reaction auxiliaries such as catalyst. In order to meet these demands, for example, a process for polymerizing a rosin where an insoluble polymer having an organic sulfonic acid group is used as a catalyst is proposed (U.S. Patent No. 4,414,146). This process is industrially superior to the above-mentioned process because the catalyst can be removed by, for example, filtration alone, the steps are simple, and an equipment for treating wastewater is not necessary.

However, when a polymerized rosin is prepared through this process, the yield of the polymerized rosin is low because the above-mentioned insoluble polymer catalyst is insufficient in catalytic activity, and the quality of the polymerized rosin prepared is unsatisfactory because decarboxylation reaction of rosin occurs. The above-mentioned U.S. patent discloses that the insoluble polymer catalyst can be reused. However, a high degree of regeneration treatment is indispensable to the reuse of the recovered catalyst because the recovered catalyst as it is has inferior catalytic activity.

An object of the present invention is to provide a novel process capable of efficiently preparing a polymerized rosin through simple preparing steps without using an advanced equipment. A further object of the present invention is to provide a novel process capable of efficiently and economically preparing a polymerized rosin by recovering a catalyst and reusing the recovered catalyst.

DISCLOSURE OF INVENTION

The present inventors earnestly made a study in light of the above-mentioned problems of conventional processes for preparing a polymerized rosin. As a result, they have found that the above-mentioned problems can be solved by using particles of a specific copolymer as a catalyst and, additionally, using a specific organic solvent, thus having accomplished the present invention.

The present invention relates to a process for preparing a polymerized rosin wherein a rosin is polymerized in the presence of particles of a copolymer of an ethylenically unsaturated monomer (a) and a crosslinking monomer (b) copolymerizable with the monomer (a), said particles having an average particle diameter of 0.1 to 3 mm, a specific surface area of 1 to 70 $m^2$/g, a pore volume of 0.1 to 1 ml/g, an average pore diameter of 100 to 1,500 Å and an acidic functional group content of 2.0 to 7.0 milli-equivalent/g.

The present invention also relates to the above-mentioned process for preparing a polymerized rosin, wherein the above-mentioned copolymer particles are recovered and a rosin is polymerized in the presence of the recovered copolymer particles.

BEST MODE FOR CARRYING OUT THE INVENTION

The present invention will be explained below in detail.

The copolymer itself used in the present invention is known as a catalyst for cationic polymerization or as an ion exchange resin. In the present invention, the copolymer is selected from the known resins from the viewpoints such as catalytic activity to polymerization reaction of rosin (yield of the polymerized rosin), workability in filtration, low corrosivity to a reaction vessel and retention of catalytic activity in reusing. The copolymer must satisfy the following requirements.

In the present invention, the copolymer particles used as a catalyst (hereinafter referred to as "polymer catalyst") comprise a copolymer of an ethylenically unsaturated monomer (a) and a crosslinking monomer (b) copolymerizable with the monomer (a), and have an average particle diameter of 0.1 to 3 mm, a specific surface area of 1 to 70 $m^2$/g, a pore volume of 0.1 to 1 ml/g, an average pore diameter of 100 to 1,500 Å and an acidic functional group content of 2.0 to 7.0 milli-equivalent/g.

As an ethylenically unsaturated monomer (a), various kinds of known compounds can be used. Examples of the ethylenically unsaturated monomer (a) are, for instance, an acrylic acid ester and a methacrylic acid ester such as methyl (meth)acrylate, ethyl (meth)acrylate, propyl (meth)acrylate or isopropyl (meth)acrylate; a monovinyl aromatic compound such as styrene, vinyltoluene, vinylethylbenzene, vinylnaphthalene, α-methylstyrene or vinylanisole, and the like. The ethylenically unsaturated monomers (a) may be used alone or in an appropriate combination of at least 2 kinds thereof. A copolymer prepared by using styrene as an ethylenically unsaturated monomer (a) is preferable because sulfonic acid group can be easily introduced therein so that a polymer catalyst having a sulfonic acid group content within a preferable range can be easily prepared.

As a crosslinking monomer (b) copolymerizable with the monomer (a), various kinds of known compounds having at least two ethylenically unsaturated groups can be used. Examples of the crosslinking monomer (b) are, for instance, a polyvinyl aliphatic compound such as ethylene glycol diacrylate, diallyl phthalate or divinyl adipate; and a polyvinyl aromatic compound such as divinylbenzene, divinyltoluene or divinylnaphthalene. The crosslinking monomers (b) may be used alone or in an appropriate combination of at least 2 kinds thereof. From the viewpoints such as crosslinking ability, i.e., property to form crosslinkage easily, and ease of its availability, divinylbenzene is preferable. The ratio of the ethylenically unsaturated monomer (a) to the crosslinking monomer (b) is not particularly limited, but the ratio of (a)/(b) is usually within the range of 98/2 to 45/55 (% by weight).

The polymer catalyst used in the present invention has an acidic functional group. The acidic functional group of the polymer catalyst includes carboxyl group, sulfonic acid group, and the like. From the viewpoint of catalytic activity, a polymer catalyst having sulfonic acid group is preferable. The content of the acidic functional group is not particularly limited, but preferably from about 2.0 to about 7.0 milli-equivalent/g, more preferably about 3.0 to about 7.0 milli-equipment/g. A polymer catalyst having an acidic functional group content of less than 2.0 milli-equivalent/g tends to have a low catalytic activity. A polymer catalyst having an acidic functional group content of more than 7.0 milli-equivalent/g tends to be difficult to be produced in practice. The acidic functional group content of polymer catalyst can be determined, for example, by measuring the salt-splitting capacity per dry weight of the polymer catalyst. Concretely, 1 g of a polymer catalyst in dry state, 50 g of deionized water and 5 g of NaCl are introduced into a beaker, stirred and titrated with a 0.1 mole/l aqueous solution of NaOH by using a methyl red/methylene blue mixed indicator, and the acidic functional group content is calculated according to the following equation.

$$\text{Acidic functional group content (milli-equivalent/g)}$$

$$= \text{Volume of 0.1 mole/l aqueous solution of NaOH required}$$

$$\text{for the titration (ml)} \times \text{Factor of NaOH} \times 0.1 \div \text{Weight of}$$

$$\text{polymer catalyst (g)}$$

The polymer catalyst can be prepared by various known processes described in, for example, Japanese Examined Patent Publication No. 37-13792, Japanese Examined Patent Publication No. 46-19044 and Japanese Examined Patent Publication No. 46-40431 without particular limitation. For example, the polymer catalyst can be prepared by copolymerizing an ethylenically unsaturated monomer (a) and a crosslinkihg monomer (b) through a process such as suspension polymerization and introducing an acidic functional group to the obtained copolymer particles. For example, sulfonic acid group can be introduced by acting a sulfonating agent onto the above-mentioned copolymer particles. As a sulfonating agent can be used known sulfonating agents such as sulfuric acid, sulfur trioxide and chlorosulfonic acid. Also, carboxyl group can be introduced by hydrolysis of ester bonds of the above-mentioned copolymer particles with an alkaline material.

The polymer catalyst used in the present invention is porous particles having an average particle diameter of about 0.1 to about 3 mm, preferably about 0.3 to about 2 mm. A polymer catalyst having an average particle diameter of less than 0.1 mm is difficult to be separated and removed from a reaction mixture in polymerization of rosin by a simple and easy operation such as filtration, and also has a problem that pressure loss increases when the reaction is conducted through a flow process. On the other hand, a polymer catalyst having an average particle diameter of more than 3 mm is comparatively difficult to be prepared in many cases. The average particle diameter of the polymer catalyst corresponds to the diameter of openings of a sieve on which 50 % of the whole polymer catalyst remains and, for example, can be calculated by applying a polymer catalyst swollen enough with water to 6 kinds of sieves (16 meshes, 20 meshes, 30 meshes, 40 meshes, 50 meshes and 100 meshes; US standard) and measuring the volume ratio of residue on each of the sieves.

The polymer catalyst used in the present invention has a specific surface area of 1 to 70 $m^2/g$, a pore volume of 0.1 to 1 ml/g and an average pore diameter of 100 to 1,500 Å. A polymer catalyst having a specific surface area of less than 1 $m^2/g$, a pore volume of less than 0.1 ml/g or an average pore diameter of less than 100 Å has low catalytic activity, and is difficult to be reused because the catalytic activity is remarkably decreased by one time use. On the other hand, a polymer catalyst having a specific surface area of more than 70 $m^2/g$, a pore volume of more than 1 ml/g or an average pore diameter of more than 1,500 Å has disadvantages such as being easily damaged by stirring during the process of the present invention because the physical strength easily lowers.

The specific surface area of the polymer catalyst can be measured by, for example, BET method. The pore volume can be measured by, for example, mercury pressure-introducing method. The average pore diameter can be measured by, for example, mercury pressure-introducing method.

Examples of the polymer catalyst are, for instance, DIA ION PK series, DIA ION HPK series and DIA ION RCP series (which are trade marks, available from MITSUBISHI CHEMICAL CO., LTD.); DUOLITE C series and DUOLITE SC series (which are trade marks, available from SUMITOMO CHEMICAL INDUSTORIES CO., LTD.); PUROLITE C series and PUROLITE CT series (which are trade marks, available from PUROLITE CO., LTD.).

The polymer catalyst used in the present invention has a low corrosivity to metals and has the advantage that it is possible to prepare easily a polymerized rosin by using a reaction equipment made of a usual material such as stainless steel without the need of using a reaction equipment made with a special treatment such as glass lining or without the need of using a reaction equipment made of expensive material such as hasteloy.

In the present invention, a rosin is used as a starting material. The rosin may be gum rosin, tall oil rosin, and wood rosin. When a purified rosin is used, a polymerized rosin having good color tone or a polymerized rosin containing low amount of impurities such as metals can be obtained. Rosin can be purified by usual method such as distillation.

In the present invention, a polymerized rosin is prepared by heating a rosin in the presence of the above-mentioned polymer catalyst to react and polymerize. Usually, when the rosin is allowed to react in an organic solvent, the stirring efficiency of the reaction system can be improved. The organic solvents can be used without particular limitation so long as those which dissolve the rosin only but not the polymer catalyst and those which do not inhibit polymerization reaction of the rosin.

Examples of the organic solvent are an aromatic hydrocarbon such as toluene or xylene; a ketone such as methyl ethyl ketone or methyl isopropyl ketone; an ester such as ethyl acetate or butyl acetate; a halogenated hydrocarbon such as carbon tetrachloride, ethylene dichloride, trichloroethane, tetrachloroethane, trichloroethylene, tetrachloroethylene, dichloropropane, chlorobenzene, dichlorobenzene or chlorotoluene; an organic acid having carboxyl group and anhydride thereof such as acetic acid, propionic acid, butanoic acid and their anhydrides, formic acid, chloroacetic acid and lactic acid, and the like. Organic solvents can be used alone or in an appropriate combination of at least 2 kinds thereof.

When a halogenated hydrocarbon and/or an organic acid, particularly ethylene dichloride or acetic acid, is used as the organic solvent, the polymer catalyst tends to exhibit a longer life, and the used organic solvent tends to be easily recovered and reused. When a halogenated hydrocarbon and/or an organic acid is used in combination with another organic solvent, the content of the halogenated hydrocarbon and/or the organic acid is preferably at least 1 % by weight, particularly at least 5 % by weight.

The amount of the organic solvent is not particularly limited, but, usually, the organic solvent is used in an amount of preferably 40 to 900 % by weight, more preferably 40 to 150 % by weight, based on rosin charged in the reaction system. If the amount of the organic solvent is more than 900 % by weight based on the rosin charged, the yield of the polymerized rosin per a reaction vessel tends to lower, thus industrially unpreferable. If the amount is less than 40 % by weight, the viscosity of the obtained reaction mixture containing a polymerized rosin tends to increase to lower the workability.

In the process for preparing a polymerized rosin of the present invention, rosin is polymerized in the presence of a polymer catalyst and preferably in an organic solvent containing acetic acid and/or ethylene dichloride. The method of polymerization of rosin is not particularly limited and appropriately selected from various known reaction methods. For example, a batch method where a reaction vessel is charged with rosin, a polymer catalyst and an organic solvent, and the reaction is conducted with stirring, or a flow method where rosin or a solution of rosin in an organic solvent is flowed through a fixed bed of a polymer catalyst, can be used.

In batch method, rosin can be polymerized by, for example, introducing rosin, a polymer catalyst in an amount of 10 to 100 % by weight, preferably 10 to 60 % by weight, based on the rosin, and an organic solvent into a reaction vessel, and then by heating them under reaction conditions of a reaction temperature of about 50 to about 120°C, preferably about 60 to about 110°C, and a reaction time of about 1 to about 20 hours. If the amount of the polymer catalyst is small, there is a tendency that the reaction does not proceed to lower the yield of the polymerized rosin, and if the amount is large, a side reaction such as decarboxylation of rosin tends to occur to lower the yield of the polymerized rosin. If the reaction temperature is low, there is a tendency that the reaction does not proceed to lower the yield of the polymerized rosin, and if the reaction temperature is high, a side reaction such as decarboxylation of rosin tends to occur to lower the yield of the polymerized rosin. If the reaction time is short, there is a tendency that the reaction does not proceed saficiently to lower the yield of the polymerized rosin, and if the reaction time is long, a side reaction such as decarboxylation of rosin tends to occur to lower the yield of the polymerized rosin, and further the productivity tends to decrease.

In the batch method, after the completion of the polymerization reaction of the starting rosin, the objective polymerized rosin can be obtained by separating and removing the polymer catalyst and the organic solvent. For example, the polymer catalyst can be removed by a method such as filtration. For example, the organic solvent can be distilled away by a method such as distillation under reduced pressure.

In flow method, the rosin can be polymerized, for example, by making rosin or a solution of rosin in an organic solvent flow through a fixed bed packed with a polymer catalyst under reaction conditions of a space velocity (per 1 hour) of 0.1 to 50, a reaction temperature of 50 to 120°C, preferably 60 to 110°C, and a reaction time of about 1 to about 20 hours. If the space velocity is low, the productivity tends to decrease, and if high, there is a tendency that the reaction does not proceed sufficiently to lower the yield of the polymerized rosin. If the reaction temperature is low, there is a tendency that the reaction does not proceed to lower the yield of the polymerized rosin, and if high, a side reaction such as decarboxylation of rosin tends to occur to lower the yield of the polymerized rosin. If the reaction time is short, there is a tendency that the reaction does not proceed sufficiently to lower the yield of the polymerized rosin, and if long, a side reaction such as decarboxylation of rosin tends to occur to lower the yield of the polymerized rosin, and further the productivity tends to lower.

In the flow method, the objective polymerized rosin can be obtained by removing the organic solvent from the reaction solution after the reaction. The organic solvent can be removed by, for example, distillation under reduced pressure.

The polymerized rosin obtained by removing the organic solvent, or the polymer catalyst and the organic solvent, from the reaction solution is usually a mixture containing unreacted rosin (monomer), a polymerized compound and the like. The polymerized compound includes a dimerized rosin as a dimer component, and a component having a molecular weight larger than that of the dimer component. The polymerized rosin obtained from the above-mentioned reaction solution contains usually about 10 to about 60 % by weight, preferably about 20 to about 60 % by weight, of the polymerized compound.

A polymerized rosin which has a higher content of polymerized compound and is industrially useful can be obtained by removing the rosin (monomer) from the polymerized rosin obtained from the above-mentioned reaction solution. For example, a polymerized rosin having a polymerized compound content of 50 to 80 % by weight, preferably 60 to 80 % by weight, can be obtained by removing the rosin (monomer) from the above-mentioned polymerized rosin. The rosin (monomer) in the polymerized rosin can be removed by, for example, distillation under reduced pressure. The polymerized compound content in the polymerized rosin can be measured by, for example, gel permeation chromatography (GPC).

According to the process of the present invention, usually, a polymerized rosin having a color tone (Gardner's color number) of about 4 to about 12, a softening point of about 90 to about 150°C, preferably about 100 to about 150°C, a weight average molecular weight (converted into polystyrene) of about 350 to about 650, and an acid value of about 130 to about 160 mgKOH/g, preferably 135 to 150 mgKOH/g can be obtained.

Because the polymer catalyst used in the present invention is difficult to remarkably decrease its catalytic activity even if being used for the polymerization reaction of rosin, a polymerized rosin can be efficiently obtained even if the polymer catalyst used for polymerization reaction of rosin is recovered and reused. Even if the catalytic activity considerably decreases after being used several times, the catalytic activity can be restored by regenerating the recovered polymer catalyst and therefore the number of times for reuse can be further increased by the regeneration. The regeneration treatment of polymer catalyst can be conducted, for example, by an operation such as washing. For example, a polymer catalyst can be washed by using acetone, a mixed solvent of acetone and water, tetrahydrofuran, a mixed solvent of tetrahydrofuran and water, or alkaline materials such as an aqueous solution of sodium hydroxide as well as the organic solvents used for preparing the polymerized rosin.

For example, in case that the recovered polymer catalyst is regenerated by using acetone, a mixed solvent of acetone and water, or the above-mentioned organic solvents used for the polymerization reaction, the regenerated polymer catalyst tends to have a higher restoration ratio of the catalytic activity. In case that the polymer catalyst is washed with an alkaline material, the acidic functional group of the polymer catalyst is neutralized, but the neutralized functional group can be converted to the acidic functional group by acting an acid onto the neutralized functional group. A volatile acid such as hydrogen chloride, can be used as the acid.

The mechanism of restoration of the catalytic activity of polymer catalyst by the above-mentioned regeneration treatment has not been made clear. However, it is inferred that the pores of a recovered polymer catalyst are in the state of being blocked up with rosin or a polymerized rosin, but the rosin and the polymerized rosin blocking up the pores are extracted with a solvent by the above-mentioned regenerating treatment to expose the pores to thereby restore the catalytic activity.

When conducting the polymerization of rosin, various kinds of additives such as an antioxidant and an ultraviolet absorber can be suitably added to the reaction system, in order to increase the stability of the obtained polymerized rosin, within the range that the polymerization reaction of rosin is not inhibited. Also, when conducting the polymerization of rosin, various kinds of known catalysts such as sulfuric acid, formic acid, p-toluenesulfonic acid and methanesulfonic acid can be used in addition to the above-mentioned polymer catalyst within the range not departing from the objects of the present invention.

EXAMPLES

The present invention is more specifically explained below by means of examples and comparative example, but the present invention is not limited to these examples. Further, in every examples and comparative example, % is shown by weight.

EXAMPLE 1

A reaction apparatus equipped with a thermometer, a stirrer, a tube for introducing nitrogen and a decompression device was charged with 100 g of gum rosin, 100 g of acetic acid as an organic solvent and 40 g of sulfonated styrene-divinylbenzene copolymer particles, as a catalyst, having an average particle diameter of 0.7 mm, a specific surface area of 50 $m^2$/g, a pore volume of 0.4 ml/g, an average pore diameter of 200 Å and a sulfonic acid group content of 4.2 milli-equivalent/g, and reaction was conducted in a nitrogen stream at 90°C. After the above-mentioned copolymer particles were removed from the product (reaction solution) by filtration, a copolymerized rosin was obtained by distilling away the acetic acid at a liquid temperature of 200°C under a reduced pressure of 8 kPa.

Another reaction was conducted again under the above-mentioned conditions by using the copolymer removed by filtration and the recovered acetic acid. The reaction operation was repeated again and again by recovering and reusing the copolymer and acetic acid in the same manner as above. When decrease in catalytic activity of the copolymer was observed during the repeated use of the copolymer, the copolymer was regenerated by washing with a mixed solvent of acetone/water (80%/20%) and used for the reaction. The result is shown in Table 1. The polymerized compound content (amount of products) in the polymerized rosin was measured by gel permeation chromatography (GPC).

EXAMPLE 2

The reaction was conducted in the same way as in EXAMPLE 1 except that 100 g of ethylene dichloride was used in stead of 100 g of acetic acid as the organic solvent. The result is shown in Table 1.

EXAMPLE 3

The reaction was conducted in the same way as in EXAMPLE 1 except that 50 g of acetic acid and 50 g of xylene were used in stead of 100 g of acetic acid as the organic solvent. The result is shown in Table 1.

EXAMPLE 4

The reaction was conducted in the same way as in EXAMPLE 1 except that 5 g of acetic acid and 95 g of xylene were used in stead of 100 g of acetic acid as the organic solvent. The result is shown in Table 1.

EXAMPLE 5

The reaction was conducted in the same way as in EXAMPLE 1 except that 50 g of xylene and 50 g of ethylene dichloride were used in stead of 100 g of acetic acid as the organic solvent. The result is shown in Table 1.

EXAMPLE 6

The reaction was conducted in the same way as in EXAMPLE 1 except that a sulfonated styrene-divinylbenzene copolymer having an average particle diameter of 0.5 mm, a specific surface area of 10 $m^2/g$, a pore volume of 0.2 ml/g, an average pore diameter of 1,000 Å and a sulfonic acid group content of 4.7 milli-equivalent/g was used as the catalyst. The result is shown in Table 1.

EXAMPLE 7

The reaction was conducted in the same way as in EXAMPLE 1 except that 100 g of xylene was used in stead of 100 g of acetic acid as the organic solvent. The result is shown in Table 2.

EXAMPLE 8

The reaction was conducted in the same way as in EXAMPLE 6 except that 100 g of xylene was used in stead of 100 g of acetic acid as the organic solvent. The result is shown in Table 2.

COMPARATIVE EXAMPLE 1

The reaction was conducted in the same way as in EXAMPLE 1 except that a sulfonated styrene-divinylbenzene copolymer having an average particle diameter of 0.8 mm, a specific surface area of 0.8 $m^2/g$, a pore volume of 0.08 ml/g, an average pore diameter of 90 Å and a sulfonic acid group content of 4.4 milli-equivalent/g was used as the catalyst. The result is shown in Table 2.

TABLE 1

| | Number of Times of Reaction (Number of Time) | Regeneration Treatment | Content of Polymerized Compounds (%) | Reaction Time (Hour) |
|---|---|---|---|---|
| Ex. 1 | 1 | - | 45.5 | 4 |
| | 2 | no | 47.1 | 6 |
| | 5 | no | 45.1 | 12 |
| | 6 | no | 39.5 | 12 |
| | 7 | yes | 45.9 | 4 |
| | 8 | no | 45.0 | 8 |
| | 10 | no | 43.2 | 12 |
| Ex. 2 | 1 | - | 47.4 | 4 |
| | 2 | no | 48.4 | 6 |
| | 5 | no | 37.5 | 12 |
| | 6 | yes | 45.5 | 4 |
| | 7 | no | 46.2 | 6 |
| | 8 | no | 42.0 | 12 |
| Ex. 3 | 1 | - | 51.9 | 4 |
| | 2 | no | 49.5 | 6 |
| | 3 | no | 48.3 | 8 |
| | 4 | no | 48.5 | 12 |
| Ex. 4 | 1 | - | 45.4 | 4 |
| | 2 | no | 45.0 | 8 |
| | 3 | no | 47.2 | 12 |

TABLE 1   (continued)

| | Number of Times of Reaction (Number of Time) | Regeneration Treatment | Content of Polymerized Compounds (%) | Reaction Time (Hour) |
|---|---|---|---|---|
| Ex. 5 | 1 | - | 48.5 | 4 |
| | 2 | no | 47.6 | 6 |
| | 3 | no | 54.9 | 8 |
| | 4 | no | 44.5 | 12 |
| Ex. 6 | 1 | - | 47.5 | 6 |
| | 3 | no | 43.5 | 12 |
| | 4 | yes | 48.0 | 6 |
| | 5 | no | 43.1 | 12 |

TABLE 2

| | Number of Times of Reaction (Number of Time) | Regeneration Treatment | Content of Polymerized Compounds (%) | Reaction Time (Hour) |
|---|---|---|---|---|
| Ex. 7 | 1 | - | 45.8 | 6 |
| | 2 | no | 26.5 | 12 |
| | 3 | no | 11.2 | 12 |
| | 4 | yes | 46.8 | 8 |
| | 5 | no | 23.3 | 12 |
| Ex. 8 | 1 | - | 47.3 | 6 |
| | 2 | no | 38.2 | 12 |
| | 4 | yes | 46.8 | 8 |
| | 5 | no | 27.5 | 12 |
| Com. Ex.1 1 | 1 - | - | 2.1 2.1 | 12 12 |

INDUSTRIAL APPLICABILITY

According to the present invention, a polymerized rosin can be prepared efficiently through simple preparation steps without using an advanced equipment by using a specific polymer catalyst. In addition, according to the present invention, because the used polymer catalyst can be recovered and reused, a polymerized rosin can be prepared more efficiently and economically.

**Claims**

1.  A process for preparing a polymerized rosin comprising a step of polymerizing rosin in the presence of particles of a copolymer of an ethylenically unsaturated monomer (a) and a crosslinking monomer (b) copolymerizable with the monomer (a), said particles having an average particle diameter of 0.1 to 3 mm, a specific surface area of 1 to 70 $m^2$/g, a pore volume of 0.1 to 1ml/g, an average pore diameter of 100 to 1,500 Å and an acidic functional group content of 2.0 to 7.0 milli-equivalent/g.

2.  The process of Claim 1, wherein said acidic functional group is sulfonic acid group.

3.  The process of Claim 1 or 2, wherein said copolymer particles are used in an amount of 10 to 100 % by weight based on said rosin.

4.  The process of Claim 1, 2 or 3, wherein rosin is polymerized in an organic solvent.

5.  The process of Claim 4, wherein said organic solvent is used in an amount of 40 to 900 % by weight based on said rosin.

6. The process of Claim 4 or 5, wherein said organic solvent contains at least 1 % by weight of an organic compound containing carboxyl group.

7. The process of Claim 6, wherein said organic compound containing carboxyl group is acetic acid.

8. The process of Claim 4 or 5, wherein said organic solvent contains at least 1 % by weight of a halogenated hydrocarbon.

9. The process of Claim 8, wherein said halogenated hydrocarbon is ethylene dichloride.

10. The process of Claim 1, 2, 3, 4, 5, 6, 7, 8 or 9, wherein said rosin is polymerized at a temperature of 50 to 120°C.

11. The process of Claim 1, 2, 3, 4, 5, 6, 7, 8, 9 or 10, wherein said copolymer particles are recovered and rosin is polymerized in the presence of the recovered copolymer particles.

12. The process of Claim 11, wherein said organic solvent is recovered and rosin is polymerized in the recovered organic solvent.

## INTERNATIONAL SEARCH REPORT

| | International application No. |
|---|---|
| | PCT/JP01/11076 |

A. CLASSIFICATION OF SUBJECT MATTER
    Int.Cl⁷ C09F7/06

According to International Patent Classification (IPC) or to both national classification and IPC

B. FIELDS SEARCHED

Minimum documentation searched (classification system followed by classification symbols)
    Int.Cl⁷ C09F1/00-11/00

Documentation searched other than minimum documentation to the extent that such documents are included in the fields searched

Electronic data base consulted during the international search (name of data base and, where practicable, search terms used)
    CAPLUS(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | US, 4414146, A (Union Camp Corp.), 08 November, 1983 (08.11.83), Abstract; claims; a reference cited in the specification of the present application (Family: none) | 1-12 |
| Y | JP, 59-108014, A (Nittetsu Kagaku Kogyo K.K.), 22 June, 1984 (22.06.84), Claims; page 2, upper right column, lines 5 to 15; page 3, upper right column, line 13 to lower left column, line 1; page 3, lower right column, lines 4 to 6 (Family: none) | 1-12 |
| Y | US, 5504234, A (Shin-Etsu Chemical Co., Ltd.), 02 April, 1996 (02.04.96), Abstract; claims; column 3, line 28 to column 4, line 2; column 5, lines 19 to 28 & JP 7-316299 A    & EP 685506 A2 | 1-12 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 March, 2002 (12.03.02) | 19 March, 2002 (19.03.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
|---|
| PCT/JP01/11076 |

C (Continuation).   DOCUMENTS CONSIDERED TO BE RELEVANT

| Category* | Citation of document, with indication, where appropriate, of the relevant passages | Relevant to claim No. |
|---|---|---|
| Y | US, 5663457, A (The Lubrizol Corp.), 02 September, 1997 (02.09.97), Abstract; Claims; column 3, line 59 to column 4, line 15 (Family: none) | 1-12 |
| A | US, 4339377, A (Union Camp Corp.), 13 July, 1982 (13.07.82), Abstract; claims (Family: none) | 1-12 |
| A | US, 4536333, A (Union Camp Corp.), 20 August, 1985 (20.08.85), Abstract; claims & JP 61-98712 A          & EP 172387 A2 & DK 8503147 A          & CN 85105747 A & BR 8503819 A          & ZA 8506110 A & AU 554179 A | 1-12 |
| A | JP, 61-140534, A (Daicel Chemical Industries, Ltd.), 27 June, 1986 (27.06.86), Claims; page 1, lower right column, line 19 to page 2, upper left column, line 13 (Family: none) | 1-12 |

Form PCT/ISA/210 (continuation of second sheet) (July 1998)